# EUROPÄISCHE PATENTSCHRIFT

(11) **EP 0 487 887 B1**
(45) Veröffentlichungstag und Bekanntmachung des Hinweises auf die Patenterteilung: **02.01.1997**
(21) Anmeldenummer: 91117634.5
(22) Anmeldetag: 15.10.1991
(51) Int. Cl.: G06K 7/10, G06K 19/06

(54) **Kraftfahrzeugfelge mit einer Codierstruktur und Decodiervorrichtung**
Motor vehicle rim having a code structure and decoder
Jante pour véhicule automobile ayant une structure d'un code et décodeur

(30) Priorität: 27.11.1990 DE 4037719
(43) Veröffentlichungstag der Anmeldung: 03.06.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: Bloss, Hans, W-8501 Heroldsberg (DE); Bauer, Norbert, W-8520 Erlangen (DE)
(74) Vertreter: Schoppe, Fritz, Dipl.-Ing.

(56) Entgegenhaltungen:
- CH-A- 0 663 742
- DD-A- 0 267 124
- DE-A- 3 007 182
- DE-A- 3 319 938
- US-A- 4 700 078

## Beschreibung

Die vorliegende Erfindung betrifft eine Kraftfahrzeugfelge mit einer Codierstruktur zur Codierung des Felgentyps sowie eine Decodiervorrichtung zum Decodieren einer derartigen Codierstruktur.

Seit geraumer Zeit sind Codierstrukturen bekannt, die mit optischen Mitteln bzw. mit Mitteln der Bildverarbeitung erfaßt werden können.

Eine der bekanntesten Codierstrukturen ist dem Fachmann als sogenannter Barcode oder Strichcode geläufig. Diese bekannte Codierstruktur wird üblicherweise auf einen Aufkleber, eine Verpackung oder einen Gegenstand in Form von schwarzen, strichförmigen oder balkenförmigen Aufdrucken ausgeführt, wobei die Breite der einzelnen strichförmigen oder balkenartigen Elemente einen bestimmten Informationsgehalt haben. Typischerweise besteht ein solcher Barcode demnach aus einer Mehrzahl von parallel zueinander in gleichen Abständen angeordneten, aufgedrucken Balkenmustern, wobei die einzelnen Balken entweder eine niedrige oder eine hohe Strichbreite haben.

Für die Erfassung eines solchen Barcodes bedient man sich üblicherweise optischer Lesegeräte mit einem Erfassungsfenster, über das der Barcode in direkter Anlage gegen das Erfassungsfenster geführt wird. Demnach eignet sich eine solche Codierstruktur vor allem für.die Bezeichnung von Gegenständen, auf denen ein den Barcode tragender Aufkleber aufklebbar ist und bei denen die Erfassung des Codes bei einer festliegenden räumlichen Beziehung des Barcodes gegenüber der Barcodeleseeinrichtung, vorzugsweise bei direkter Anlage gegen das Erfassungsfenster derselben, durchführbar ist. Da es sich bei einem Barcode um eine relativ feingliedrige Struktur handelt, können, wie bereits erwähnt, nur solche Gegenstände mit einem Barcode versehen werden, die entweder direkt oder mittels eines Aufklebers mit einem Codieraufdruck versehen werden können.

Es treten jedoch Anwendungsfälle auf, bei denen dies nicht möglich ist. Ein solcher Fall liegt beispielsweise bei der Fertigung von Leichtmetallfelgen für Kraftfahrzeuge vor. Hier ist es erforderlich, jede Felge mit einer Codierung zu versehen, die den Felgentyp bezeichnet. Die Verwendung von Codierstrukturen tragenden Aufklebern ist hier in der Regel nicht möglich. Die direkte Einprägung einer Barcodestruktur in die Felge führt nicht zu einer ausreichend sicheren Felgenidentifizierung, da bei dem Gießvorgang der Felge Verschmutzungen und Gratbildungen auftreten. Ferner ergeben sich bei einer Serienfertigung Werkzeugabnützungen der Gußform, so daß es zwangsläufig zu unregelmäßigen Strichbreiten einer gegossenen Barcodestruktur käme, die deren sicherer Decodierung entgegenstünde.

Bei der optischen Identifizierung von Leichtmetallfelgen ist es nicht möglich, einen völlig gleichbleibenden Abstand einer Bildverarbeitungseinrichtung zum Erfassen der Codierstruktur von der auf der Felge angeordneten Codierstruktur zu gewährleisten, was zu einer weiteren Erhöhung der Erkennungsfehlerrate bei Verwendung bekannter Codierstrukturen führen würde.

Aus der EP-A-0296024 ist bereits ein metallisches Etikett bekannt, welches neben einer alphanumerischen Information diese Information in einer Strichcodeform umfaßt. Der Strichcode umfaßt balkenförmige Strichmuster mit zwei verschiedenen Breiten, die gegeneinander mit entweder einem ersten, geringen Abstand oder einem zweiten, großen Abstand versetzt sind. Dieser Strichcode ist mit einer optoelektronischen Erfassungseinrichtung lesbar.

In der älteren, nicht vorveröffentlichten EP-A-0 483 600 ist bereits eine an einem Gegenstand angebrachte Codierstruktur zur Codierung einer den Gegenstand betreffenden Information, die mittels einer Bildverarbeitungseinrichtung erfaßbar und decodierbar ist, beschrieben, bei der die Codierstruktur drei sich parallel zueinander erstreckende, an der Oberfläche des Gegenstandes ausgebildete und voneinander beabstandete Markierungskörper von jeweils im wesentlichen gleicher Breite umfaßt, die einen ersten und zweiten Abstand festlegen, deren Quotient der codierten Information zugeordnet ist.

Ausgehend von diesem Stand der Technik liegt der vorliegenden Erfindung die Aufgabe zugrunde, eine Kraftfahrzeugfelge mit einer Codierstruktur zur Codierung des Felgentyps sowie eine Decodiervorrichtung zum Decodieren einer derartigen Codierstruktur anzugeben, durch die eine hohe Decodiersicherheit auch bei relativ hohen Toleranzen der Codierstruktur ermöglicht wird.

Diese Aufgabe wird durch eine Kraftfahrzeugfelge mit einer Codierstruktur zur Codierung des Felgentyps nach dem Patentanspruch 1 und durch eine Decodiervorrichtung nach dem Patentanspruch 5 gelöst.

Die Erfindung basiert auf der Erkenntnis, daß eine besonders sichere Decodierung des durch die Codierstruktur dargestellten Felgentyps dadurch erzielt wird, daß die Codierstruktur wenigstens vier sich parallel zueinander in Umfangsrichtung des Felgenbettes der Kraftfahrzeugfelge erstreckende, an der Oberfläche des Felgenbettes ausgebildete und voneinander beabstandete Markierungskörper von jeweils im wesentlichen gleicher Breite umfaßt, die wenigstens einen ersten, zweiten und dritten Abstand zwischen jeweils zwei benachbarten Markierungskörpern festlegen, wobei die Abstände derart festgelegt sind, daß wenigstens eine erste und zweite Abstandsdifferenz der Abstände in eindeutiger Weise dem codierten Felgentyp zugeordnet sind.

Im Gegensatz zu der Barcodestruktur nach dem Stand der Technik bedient sich die erfindungsgemäße Codierstruktur nicht der Breite eines Markierungskörpers zur Codierung der Information, sondern jeweils der Differenzen von jeweils zwei Abständen. Dadurch, daß die codierte Information durch wenigstens zwei Abstandsdifferenzen in eindeutiger Weise festgelegt wird, ermöglicht die Codierstruktur eine noch zu erläuternde Decodierung, bei der der Einfluß von Maßstabsschwankungen bei der Abbildung der Codierstruktur auf einer Bildverarbeitungseinrichtung aufgrund von variierenden Abständen zwischen dem mit der Codierstruktur versehenen Gegenstand und der Bildverarbeitungseinrichtung berücksicht werden kann. Ebenfalls ermöglicht die erfindungsgemäße Codierstruktur eine eindeutige Decodierung auch bei Toleranzen der Lage der einzelnen Markierungskörper von ihrer Soll-Lage, indem bei der Decodierung vorgegebenen Bereichen innerhalb des durch die wenigstens zwei Abstandsdifferenzen festgelegten Coderaumes in eindeutiger Weise jeweils eine codierte Information zugeordnet ist.

Bevorzugte Weiterbildungen der erfindungsgemäßen Codierstruktur sowie der erfindungsgemäßen Decodiervorrichtung sind in den Unteransprüchen angegeben.

Nachfolgend werden unter Bezugnahme auf die beiliegenden Zeichnungen bevorzugte Ausführungsformen der erfindungsgemäßen Codierstruktur sowie der erfindungsgemäßen Decodiervorrichtung näher erläutert.

Es zeigen:
- Fig. 1: eine Profilansicht einer Leichtmetallkraftfahrzeugfelge mit einer daran angebrachten, erfindungsgemäßen Codierstruktur zur Identifikation des Felgentypes;

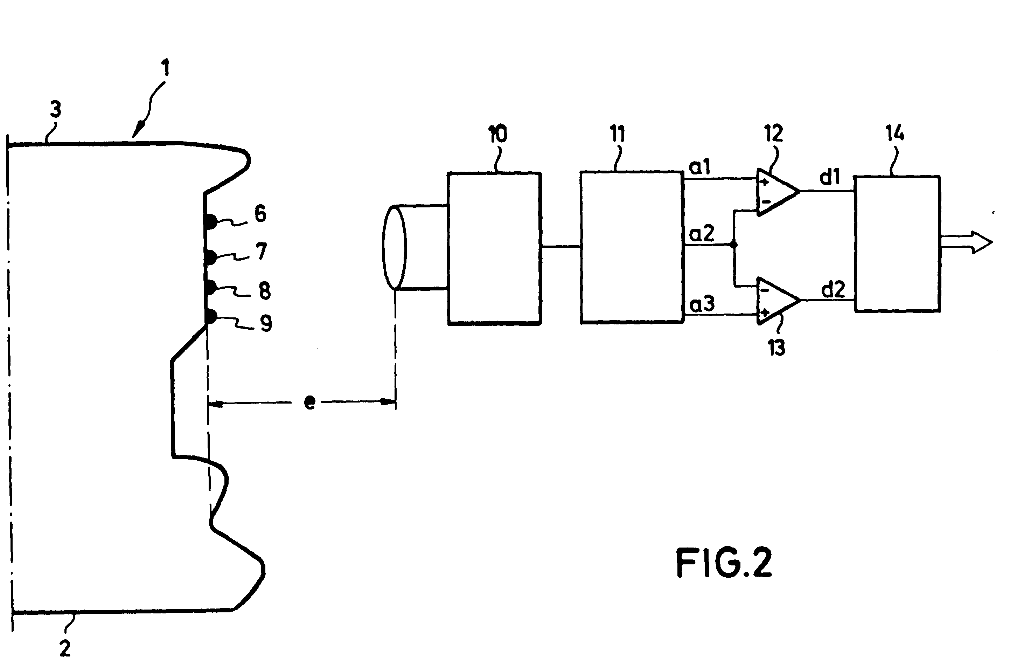

- Fig. 2: eine Profilansicht der in Fig. 1 gezeigten Kraftfahrzeugfelge mit einer Bildverarbeitungseinrichtung zum Erfassen und Decodieren des durch die Codierstruktur dargestellten Codes;
- Fig. 3: eine Schnittdarstellung durch die Leichtmetallkraftfahrzeugfelge im Bereich der Codierstruktur;
- Fig. 4: eine Draufsicht auf die Codierstruktur;
- Fig. 5: eine Darstellung des Codes im Coderaum unter Berücksichtigung von Abbildungsmaßstabsänderungen; und
- Fig. 6: eine der Fig. 5 entsprechende Darstellung unter Berücksichtigung von Toleranzen in der Anordnung der Markierungskörper.

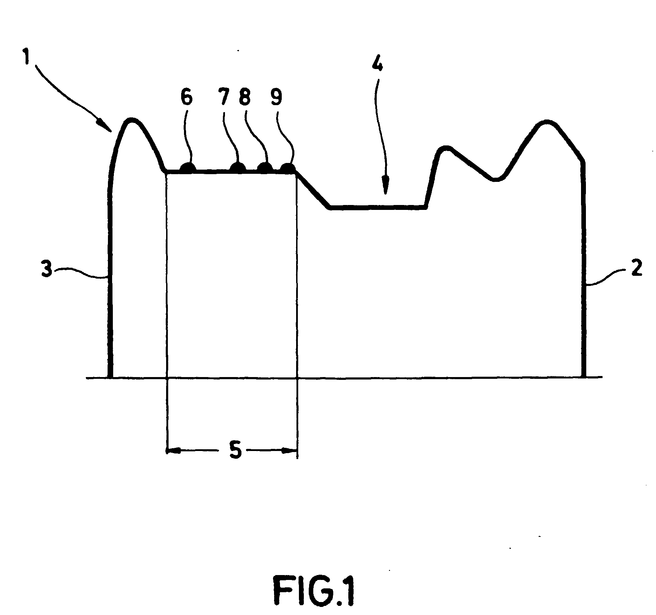

Wie in Fig. 1 gezeigt ist, hat eine Kraftfahrzeug-Leichtmetallfelge, die in ihrer Gesamtheit mit dem Bezugszeichen 1 bezeichnet ist und die in einer Halbprofilansicht dargestellt ist, eine Speichenseite 2, eine der Speichenseite gegenüberliegende Nabenseite 3 und ein Felgenbett 4. Das Felgenbett 4 hat typischerweise einen ebenen, zylindermantelförmigen Bereich 5, der innerhalb des Felgenbettes 4 auf der der Speichenseite 2 abgewandten Seite liegt.

In Umfangsrichtung des Felgenbettes 4 liegen innerhalb des ebenen Bereiches 5 vier Markierungskörper 6, 7, 8, 9, die bei dem gezeigten Beispielsfall die Form von erhabenen Rillenkörpern aufweisen. Die Rillenkörper 6, 7, 8, 9 haben eine in etwa gleiche Breite, die für die codierte Information unmaßgeblich ist.

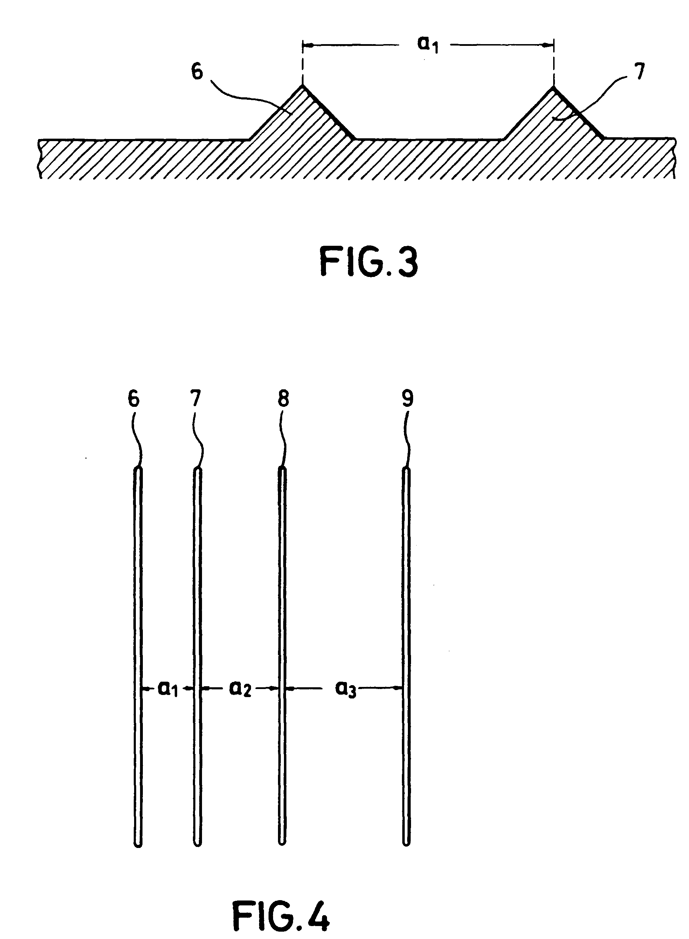

Wie in Fig. 3 gezeigt ist, weisen die erhabenen Rillenkörper 6, 7, 8, 9 jeweils identisch miteinander übereinstimmende Querschnittsformen auf, die vorzugsweise dreieckig sind. Die jeweiligen Scheitel der im Querschnitt dreieckigen Querschnitte der Rillenkörper 6, 7, 8, 9 legen zueinander einen Abstand ai bzw. einen ersten, zweiten und dritten Abstand al, a2, a3 fest, wie dies insbesondere auch in Fig. 4 verdeutlicht ist.

Die Abstände al, a2, a3 sind derart festgelegt, daß wenigstens eine erste und zweite Abstandsdifferenz dl, d2 der Abstände in eindeutiger Weise der codierten Information zugeordnet sind. Die erste Abstandsdifferenz dl wird festgelegt durch den ersten Abstand al vermindert um den zweiten Abstand a2. Die zweite Differenz d2 wird festgelegt durch den dritten Abstand a3 vemindert um den zweiten Abstand a2. Die erste Rille 6 liegt in einem festen, vorgegebenen Abstand zum Rand des ebenen Bereiches 5, wobei dieser Abstand beispielsweise 50 mm betragen kann.

Die nachfolgend erläuterte Codeauswahl ergibt sich aus den Randbedingungen, die bei dem erläuterten Beispielsfall der Codierung einer Leichtmetallkraftfahrzeugfelge vorliegen. Der gußtechnisch realisierbare Minimalabstand zweier Markierungskörper 6, 7, 8, 9 beträgt 5 mm. Die Toleranz des Ortes eines Markierungskörpers beträgt plus/minus 0,2 mm. Aufgrund einer begrenzten axialen Erstreckung des ebenen Bereiches 5 soll der Raumbedarf für ein Codewort 22 mm nicht überschreiten. Bei Verwendung zweier Codewörter, welche zwei Codierstrukturen der in Fig. 1 gezeigten Art erforderlich machen würde, beträgt der zulässige Raumbedarf 44 mm.

Die zulässige Entfernung e zwischen einer Videokamera 10 der Bildverarbeitungseinrichtung 10 bis 14 und der Codierstruktur 6, 7, 8, 9 soll derart gewählt werden, daß sich bei einer gegebenen Optik eine Bildbreite zwischen 50 mm und 80 mm ergibt. Diese zulässige Bildbreitenvariation ermöglicht es, daß auf ein Justieren der Bildverarbeitungseinrichtung 10 bis 14 verzichtet werden kann.

Der Abstand zwischen jeweils zwei Markierungskörpern beträgt bei der erfindungsgemäßen Codierstruktur zwischen 5 mm und 9 mm. Es werden folgende Abstandswerte verwendet: ai = 5 mm; 6 mm; 7 mm; 8 mm; 9 mm.

Daraus ergeben sich folgende mögliche Differenzen (jeweils in mm): di = minus 4; minus 3; minus 2; minus 1; 0; 1; 2; 3; 4.

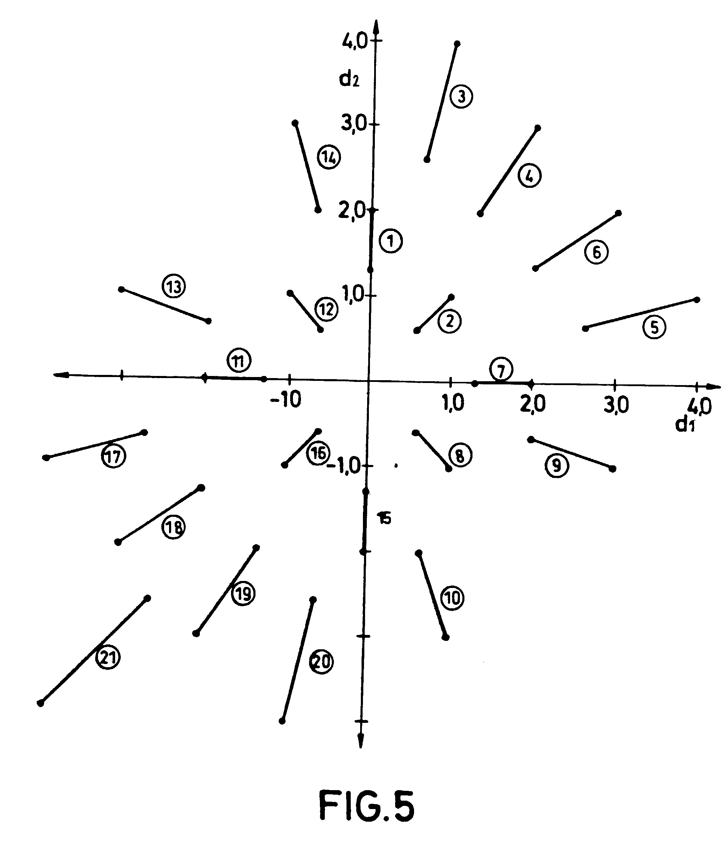

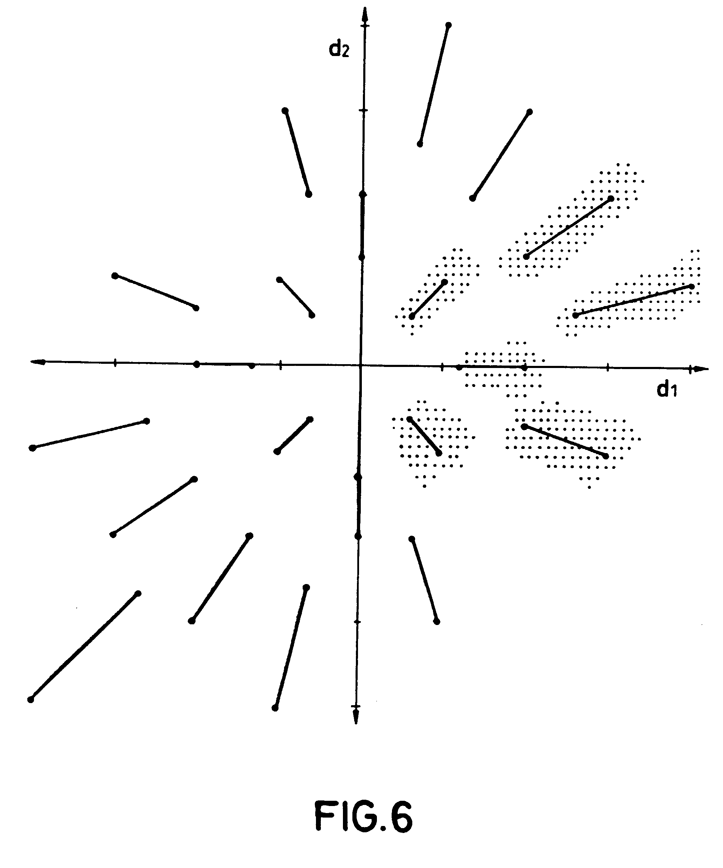

Die nachfolgend wiedergegebene Codetabelle gibt eine bevorzugte Ausführungsform des erfindungsgemäßen, nicht systematischen Codes wieder, dessen Auswahlkriterien unter Bezugnahme auf die Fig. 5 und 6 erläutert werden.

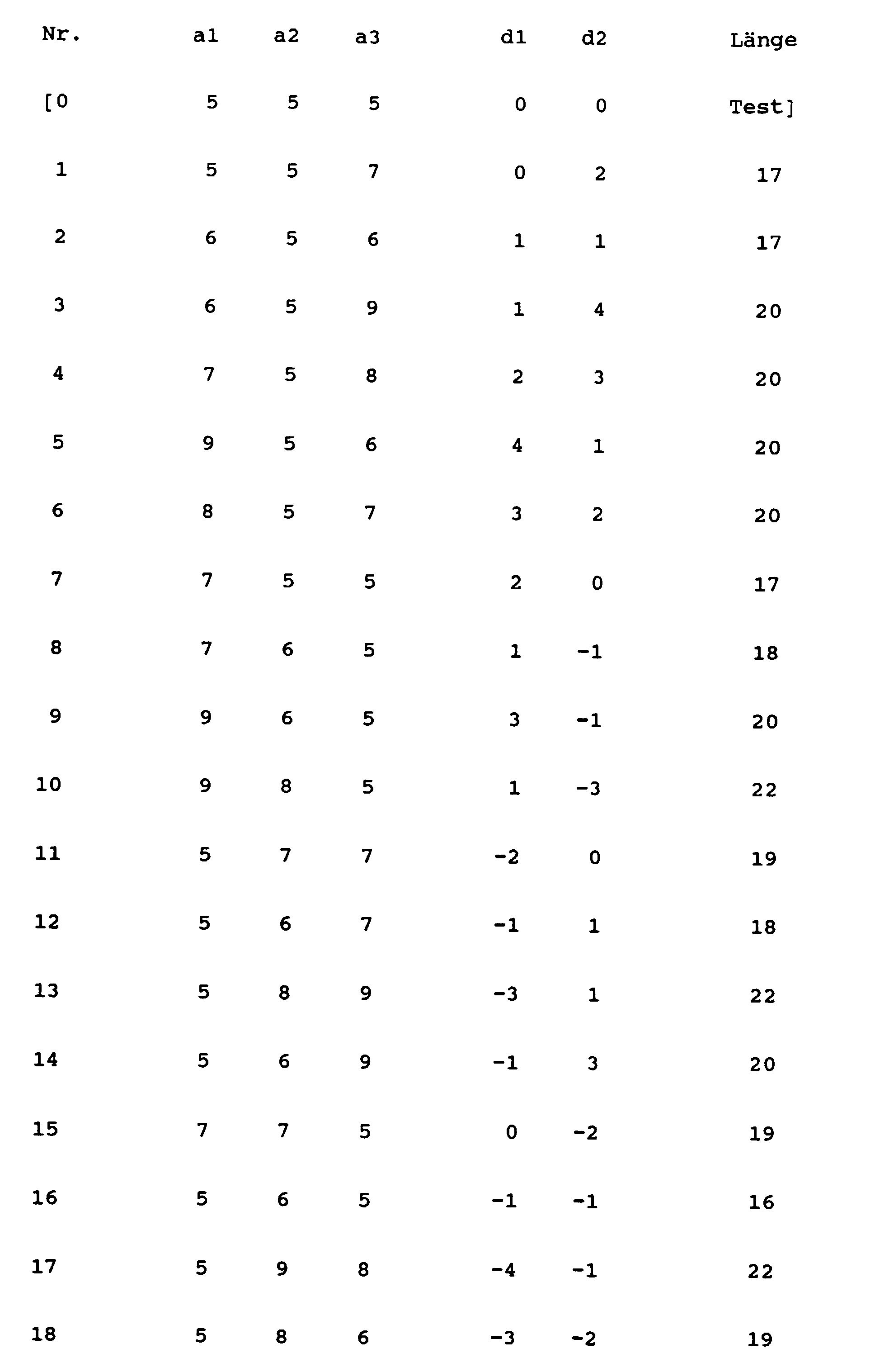

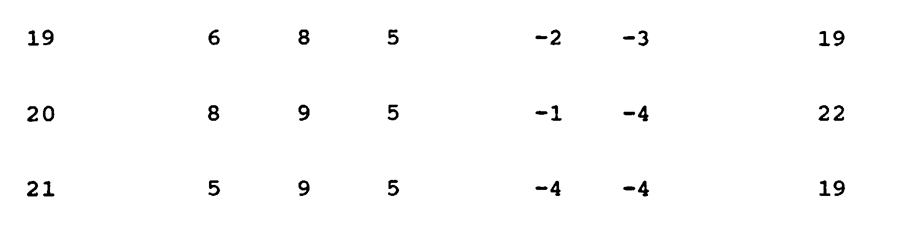

Bevor die Vorgehensweise der Decodierung des erfindungsgemäßen Codes erläutert wird, wird zunächst auf das Blockdiagramm einer erfindungsgemäßen Decodiervorrichtung für einen solchen Code Bezug genommen. Die Decodiervorrichtung umfaßt eine Videokamera 10, eine der Videokamera 10 nachgeordnete Bildverarbeitungseinheit 11, die aus dem von der Videokamera 10 abgegebenen Videosignal Ausgangssignale gewinnt, die den einzelnen Abständen a1, a2, a3 entsprechen. Derartige Bildverarbeitungseinheiten sind an sich im Stand der Technik bekannt, so daß deren Erläuterung entbehrlich ist.

Die Videokamera 10 ist derart angeordnet, daß die Videozeilen senkrecht zu den Markierungskörpern 6, 7, 8, 9 liegen. Die Lage der Markierungskörper 6, 7, 8, 9 kann daher prinzipiell bereits mit einer einzigen Videozeile erkannt werden. Bei Verwendung einer einzigen Videozeile kann jedoch noch eine geschätzte Fehlerrate 10⁻¹ bis 10⁻² auftreten.

Zur Erhöhung der Erkennungssicherheit wird eine Mehrheitsentscheidung aus zweihundertsechsundfünfzig Videozeilen durch die Bildverarbeitungseinheit 11 gebildet. Ein Code, der drei Abstände a1, a2, a3 umfaßt, wird daher als gültig definiert, wenn er mindestens durch einhundertachtundzwanzig Videozeilen erkannt wird. Anderenfalls wird das Codewort als ungültig definiert.

Die Abstandswerte a1, a2, a3 werden zwei Subtrahierern 12, 13 zugeführt, die eine erste Differenz d1 = a1 minus a2 und eine zweite Differenz d2 = a3 minus a2 bilden. Bei dieser Differenzbildung ergibt sich der oben angegebene Wertebereich für di von minus 4; minus 3; minus 2; minus 1; 0; plus 1; plus 2; plus 3; plus 4.

Dieses Wertepaar d1; d2 wird als Eingangsgröße für eine Tabellendecodierung mittels eines programmierbaren Festwertspeichers 14 (PROM) verwendet. Die Differenzenbildung ermöglicht eine sehr schnelle Signalverarbeitung, so daß die Videosignale von 10 MHz in Echtzeit verarbeitet werden können.

Innerhalb des PROM 14 sind jeweils vorbestimmten Bereichen d1, d2 der Eingangsdifferenzen bestimmte Nummern gemäß der obigen Tabelle zugeordnet. Die Festlegung dieser Bereiche innerhalb der PROM-Tabelle, die in Fig. 6 skizziert ist, wird nachfolgend näher erläutert.

Die Fig. 5 und 6 zeigen jeweils die Lage derjenigen Differenzenpaare d1, d2 im Coderaum, die einer Nummer des Codes zugeordnet sind.

Wie aus den Fig. 5 und 6 hervorgehen wird, umfaßt der erfindungsgemäße Code lediglich einundzwanzig Nummern, die in der Weise aus den einundachtzig möglichen Codewerten ausgewählt sind, daß eine maximale Sicherheit bei der Decodierung sowohl unter Berücksichtigung von Maßstabsschwankungen aufgrund eines sich ändernden Abstandes zwischen der Videokamera 10 und der Codierstruktur 6, 7, 8, 9 wie auch unter Berücksichtigung von Toleranzen in der Lage der einzelnen Markierungskörper 6, 7, 8, 9 ergibt.

Fig. 5 zeigt den theoretischen Fall des Codes im Coderaum bei einer Codierstruktur, deren Markierungskörper ohne Toleranzen an ihrem Soll-Ort liegen. Wie erläutert wurde, ist die Entfernung e zwischen der Videokamera 10 und der Codierstruktur 6, 7, 8, 9 kein fester Wert, sondern ein sich von Fall zu Fall ändernder Wert, der beim Ausführungsbeispiel zu einer Bildbreite der Videokammera 10 zwischen 50 und 80 mm führt. Hieraus ergeben sich aufgrund von Maßstabsschwankungen innerhalb des Coderaumes für jede Codenummer eine Gerade, die sich durch das in der Codetabelle angegebene Abstandsdifferenzenwertepaar erstreckt. Die Strecke läuft von diesem Punkt aus in Richtung zum Ursprung des Coderaumes um eine Länge, die aus der Abbildungsmaßstabsvariation innerhalb des Bildbreitenbereiches von 50 mm bis 80 mm hervorgeht.

Jedoch kann die Lage jedes einzelnen Markierungskörpers innerhalb eines Toleranzbereiches von plus/minus 0,2 mm bei dem gezeigten Ausführungsbeispiel einer Leichtmetallkraftfahrzeugfelge um die Soll-Lage variieren. Dies führt zu einem entsprechenden Bereich um die in Fig. 5 gezeigten Strecken, der in Fig. 6 für einige Codenummern durch einen zulässigen Bereich skizziert ist.

Die Bereiche, die sich aus den Differenzvariationen aufgrund der Abstandsvariationen ausgehend von den in Fig. 5 gezeigten Strecken ergeben, liegen bei dem erfindungsgemäßen Code jeweils derart, daß immer ein zulässiger Differenzenwertebereich in eindeutiger Weise einer Codenummer zugeordnet ist. Differenzenwertepaare, die außerhalb der zulässigen Bereiche liegen, sind als ungültiger Code definiert.

Demgemäß sind in dem PROM 14 in Abhängigkeit von den Eingangsgrößen d1, d2 Tabellen festgelegt, deren Inhalt dem in Fig. 6 gezeigten Coderaum entspricht.

Für den Fachmann ist es offensichtlich, daß sich die obigen Erläuterungen des bevorzugten Ausführungsbeispieles auf eine Codierstruktur beziehen, die einen Code verkörpert, der für vorgegebene, vom Einzelfall abhängige Randbedingungen optimiert ist. Bei anderen Randbedingungen, die beispielsweise durch größere oder kleinere Abbildungsmaßstabsschwankungen oder größere bzw. kleinere Lagetoleranzen der Markierungskörper gegeben sind, kann eine veränderte Auswahl des Codes aus den möglichen Codewörtern erforderlich sein.

Das gezeigte Ausführungsbeispiel arbeitet mit einem einzigen Codewort, welches durch vier Markierungskörper festgelegt ist. Ebenfalls sind solche Codewörter denkbar, die mit fünf Markierungskörpern und daher mit drei Abstandsdifferenzen di arbeiten. In diesem Fall ist der Coderaum dreidimensional. In diesem Beispielsfall muß das PROM als dreidimensionale Tabelle programmiert sein.

Anstelle der Verwendung eines einzelnen Codewortes können auch zwei oder mehr Codeworte verwendet werden.

Die Markierungskörper können anstelle einer erhabenen Struktur auch als Ausnehmungen oder rillenförmige Vertiefungen gebildet sein.

## Patentansprüche

1. Kraftfahrzeugfelge (1) mit einer mittels einer Bildverarbeitungseinrichtung (10-14) erfaßbaren und decodierbaren Codierstruktur zur Identifikation des Felgentypes, wobei die Codierstruktur wenigstens vier sich parallel zueinander in Umfangsrichtung des Felgenbettes (4) der Kraftfahrzeugfelge erstreckende, an der Oberfläche des Felgenbettes (4) ausgebildete und voneinander beabstandete Markierungskörper (6, 7, 8, 9) von jeweils im wesentlichen gleicher Breite umfaßt, die wenigstens einen ersten, zweiten und dritten Abstand (al, a2, a3) zwischen jeweils zwei benachbarten Markierungskörpern (6, 7, 8, 9) festlegen, wobei die Abstände (al, a2, a3) derart festgelegt sind, daß wenigstens eine erste und zweite Abstandsdifferenz (dl, d2) der Abstände (al, a2, a3) in eindeutiger Weise dem codierten Felgentyp zugeordnet sind.

2. Kraftfahrzeugfelge nach Anspruch 1, bei der die Markierungskörper als erhabene Rillenkörper (6, 7, 8, 9) ausgebildet sind.

3. Kraftfahrzeugfelge nach Anspruch 1, bei der die Markierungskörper als rillenförmige Vertiefungen oder Ausnehmungen des Felgenbettes (4) ausgebildet sind.

4. Kraftfahrzeugfelge nach Anspruch 1, bei der die Markierungskörper (6, 7, 8, 9) eine im Querschnitt dreieckige Gestalt haben.

5. Decodiervorrichtung zum Decodieren einer an einer Kraftfahrzeugfelge vorgesehenen Codierstruktur nach einem der Ansprüche 1 bis 4, mit
einer Bildverarbeitungsvorrichtung (10, 11) zum optischen Erfassen der Abstände zwischen den Markierungskörpern (6, 7, 8, 9) und zum Erzeugen von Abstandssignalen;
wenigstens zwei Subtrahierern (12, 13), die der Bildverarbeitungsvorrichtung (10, 11) nachgeschaltet sind, zum Erzeugen von Differenzsignalen (d1, d2) zwischen jeweils zwei durch die Abstandssignale dargestellten Abständen (a1, a2, a3); und
einer Tabellenspeichereinrichtung (14), die aufgrund von wenigstens zwei Differenzsignalen (d1, d2) auslesbar ist.

6. Decodiervorrichtung nach Anspruch 5, bei der die Tabellenspeichereinrichtung als PROM (14) ausgebildet ist.

## Claims

1. A motor vehicle rim (1) having a code structure which is adapted to be detected by means of an image processor (10 - 14) and decoded and which is used for identifying the type of rim, said code structure comprising at least four spaced mark elements (6, 7, 8, 9) extending parallel to one another in the circumferential direction of the rim well (4) of the motor vehicle rim and formed on the surface of said rim well (4), said mark elements (6, 7, 8, 9) having essentially the same width and determining at least first, second and third distances (a1, a2, a3) between two respective neighbouring mark elements (6, 7, 8, 9), said distances (a1, a2, a3) being determined in such a way that at least a first and a second distance difference (d1, d2) between said distances (a1, a2, a3) is associated with the coded type of rim in an unequivocal manner.

2. A motor vehicle rim according to claim 1, wherein the mark elements are raised groove bodies (6, 7, 8, 9).

3. A motor vehicle rim according to claim 1, wherein the mark elements are groove-shaped depressions or recesses in the rim well (4).

4. A motor vehicle rim according to claim 1, wherein the mark elements (6, 7, 8, 9) have a configuration that is triangular in cross-section.

5. A decoder for decoding a code structure provided on a vehicle rim according to one of the claims 1 to 4, said decoder comprising
an image processor (10, 11) for optically detecting the distances between the mark elements (6, 7, 8, 9) and for producing distance signals;
at least two subtracters (12, 13), which are connected downstream of said image processor (10, 11), for producing difference signals (d1, d2) between two respective distances (a1, a2, a3) represented by the distance signals; and
a table storage means (14) which is adapted to be read on the basis of at least two difference signals (d1, d2).

6. A decoder according to claim 5, wherein the table storage means is a PROM (14).

## Revendications

1. Jante (1) pour véhicule automobile avec une structure de code, pouvant être captée et décodée à l'aide d'un dispositif de traitement d'images (10 à 14), pour l'identification du type de jante, dans laquelle la structure de code comporte au moins quatre éléments de marquage (6, 7, 8, 9) distants l'un de l'autre, s'étendant parallèles entre eux dans le sens du pourtour du lit de jante (4) de la jante pour véhicule automobile, réalisés à la surface du lit de jante (4), chacun sensiblement de même largeur, qui déterminent au moins une première, une seconde et une troisième distance (a1, a2, a3) entre chaque fois deux éléments de marquage (6, 7, 8, 9) adjacents, les distances (a1, a2, a3) étant déterminées de façon qu'au moins une première et une seconde différence d'écartement (d1, d2) entre les distances (a1, a2, a3) sont associées de manière univoque au type de jante codé.

2. Jante pour véhicule automobile suivant la revendication 1, dans laquelle les éléments de marquage se présentent sous forme d'éléments de strie en relief (6, 7, 8, 9).

3. Jante pour véhicule automobile suivant la revendication 1, dans laquelle les éléments de marquage se présentent sous forme de creux ou d'évidements en forme de rainures du lit de jante (4).

4. Jante pour véhicule automobile suivant la revendication 1, dans laquelle les éléments de marquage (6, 7, 8, 9) ont une section de forme triangulaire.

5. Dispositif de décodage destiné à décoder une structure de code suivant l'une des revendications 1 à 4 aménagée sur une jante pour véhicule automobile, avec
un dispositif de traitement d'images (10, 11) destiné à capter optiquement les distances entre les éléments de marquage (6, 7, 8, 9) et à générer des signaux de distance,
au moins deux soustracteurs (12, 13) qui sont connectés après le dispositif de traitement d'images (10, 11), destinés à générer des signaux de différence (d1, d2) entre chaque fois deux distances (a1, a2, a3) représentées par les signaux de distance, et
un dispositif de mémoire de tableaux (14) qui peut être lu sur base d'au moins deux signaux de différence (d1, d2).

6. Dispositif de décodage suivant la revendication 5, dans lequel le dispositif de mémoire de tableaux se présente sous forme de PROM (14).
